# EUROPEAN PATENT APPLICATION

(11) **EP 4 778 618 A1**
(43) Date of publication of application: **22.07.2026**
(21) Application number: 24864672.1
(22) Date of filing: 11.09.2024
(51) Int. Cl.: B01D 59/26

(54) **ADSORBENT FOR GERMANIUM [68 GE]-GALLIUM [68 GA] GENERATOR, PREPARATION METHOD THEREFOR AND GERMANIUM [68 GE]-GALLIUM [68 GA] GENERATOR**

(30) Priority: 13.09.2023 CN 202311178638; 13.09.2023 CN 202311178636
(71) Applicant: Chengdu New Radiomedicine Technology Co., Ltd., Chengdu, Sichuan 610200 (CN)
(72) Inventor: HU, Xiaoyang, Jining, Shandong 272059 (CN); ZHANG, Shuang, Nanchong, Sichuan 637172 (CN); HU, Renxin, Sichuan 614408 (CN); JIANG, Dengrong, Chengdu, Sichuan 610095 (CN); WU, Jie, Chengdu, Sichuan 610058 (CN); TAN, Wenjing, Chengdu, Sichuan 610213 (CN); LIU, Fang, Chengdu, Sichuan 610095 (CN); GE, Qiang, Chengdu, Sichuan 610046 (CN); CAI, Jiming, Chengdu, Sichuan 610044 (CN)
(74) Representative: Cohausz & Florack
(86) International application number: PCT/CN2024/118341
(87) International publication number: WO 2025/055958

(57) **Abstract**

An adsorbent for a germanium [⁶⁸Ge]-gallium [⁶⁸Ga] generator, a preparation method therefor and a germanium [⁶⁸Ge]-gallium [⁶⁸Ga] generator. The adsorbent is used for adsorbing ⁶⁸Ge element; the adsorbent comprises a plurality of titanium dioxide particles, and the plurality of titanium dioxide particles have a specific surface area of from 30 m²/g to 100 m²/g; the titanium dioxide particles consist of a plurality of nanoparticles, and the plurality of nanoparticles have an average particle size of from 10 nm to 100 nm; the nanoparticles comprise mesopores having a pore size of from 5 nm to 30 nm.

## Description

### Cross-Reference to Related Applications

This application claims priority to Chinese patent application No. 202311178638. X entitled "Germanium [68Ge]-Gallium [68Ga] Generator" filed on September 13, 2023, and Chinese patent application No. 202311178636.0 entitled "Adsorbent for Germanium [68Ge]-Gallium [68Ga] Generator and Preparation Method Therefor" filed on September 13, 2023, both of which are hereby incorporated by reference in their entireties.

### Technical Field

This application belongs to the technical field of adsorbents, in particular relates to an adsorbent for a germanium [⁶⁸Ge]-gallium [⁶⁸Ga] generator, a preparation method therefor and a germanium [⁶⁸Ge]-gallium [⁶⁸Ga] generator.

### Background

Germanium [⁶⁸Ge]-gallium [⁶⁸Ga] generator (⁶⁸Ge-⁶⁸Ga generator) is a device that converts radioactive ⁶⁸Ge source into ⁶⁸Ga based on the principles of radioactive decay and radionuclide separation, and is used for providing ⁶⁸Ga. How to reduce the content of ⁶⁸Ge and improve the yield of ⁶⁸Ga during the process of providing ⁶⁸Ga is a direction for the improvement of germanium [⁶⁸Ge]-gallium [⁶⁸Ga] generators.

Generally speaking, the adsorption materials commonly used for adsorbing ⁶⁸Ge in ⁶⁸Ge-⁶⁸Ga generators mainly include tin dioxide, titanium dioxide, aluminum oxide, polymer matrices (such as polystyrene, polymethacrylate, etc.), and silica-organic resin copolymers. However, these adsorption materials each have their own limitations.

In 1996, the Cyclotron Company in Russia became the first to supply a ⁶⁸Ge-⁶⁸Ga generator based on modified TiO₂ to the market, with an initial elution efficiency of 60%-75%, and a ⁶⁸Ge breakthrough rate of about 0.001% (American Journal of Nuclear Medicine and Molecular Imaging, 2019, 9, 30-66); In recent years, companies such as Eckert & Ziegler Company in Germany and IRE EliT Company in Belgium have successively developed commercial ⁶⁸Ge-⁶⁸Ga generators based on TiO₂ materials. However, their elution efficiency gradually decreases with the increase of usage time, even dropping below 55%; U.S. Pat. No. US10357758B2 also discloses a method for preparing a chromatographic adsorption material used in a nuclide generator, wherein the material is used for preparing a 33 mCi ⁶⁸Ge-⁶⁸Ga generator which has an initial elution efficiency for ⁶⁸Ga of about 75%, and an elution efficiency remaining stable at 65% or more after multiple elutions, and a ⁶⁸Ge breakthrough rate satisfying the European Pharmacopoeia standard for gallium chloride [⁶⁸Ga] solution (≤ 0.001%).

It can be seen that the elution efficiency of ⁶⁸Ga of ⁶⁸Ge-⁶⁸Ga generators disclosed in the prior art is generally not higher than 75%, which is because pharmaceutical grade ⁶⁸Ge-⁶⁸Ga generators need to at least satisfy the requirement of a ⁶⁸Ge breakthrough rate of ≤ 0.001%, while improving the elution efficiency for ⁶⁸Ga is often accompanied by a corresponding increase in the ⁶⁸Ge breakthrough rate, resulting in a limited elution efficiency for ⁶⁸Ga.

Based on the above analysis, there is still a need in the art for a ⁶⁸Ge-⁶⁸Ga Generator with a lower ⁶⁸Ge breakthrough rate and a higher and more stable ⁶⁸Ga elution efficiency.

### Summary

The object of the present application is to provide an adsorbent for a germanium [⁶⁸Ge]-gallium [⁶⁸Ga] generator and the preparation method thereof, in which the adsorbent can ensure a good adsorption effect of ⁶⁸Ge, and meanwhile enable better release of ⁶⁸Ga when eluted in the germanium [⁶⁸Ge]-gallium [⁶⁸Ga] generator, thereby reducing the residue of ⁶⁸Ga on titanium dioxide particles and improving the elution efficiency. The present application also provides a germanium [⁶⁸Ge]-gallium [⁶⁸Ga] generator having at least the above beneficial effects.

In the first aspect, the embodiments of the present application provide an adsorbent for germanium [⁶⁸Ge]-gallium [⁶⁸Ga] generator, wherein the adsorbent is used for adsorbing ⁶⁸Ge element; the adsorbent comprises a plurality of titanium dioxide particles; and the titanium dioxide particles consist of a plurality of nanoparticles, and the plurality of nanoparticles have an average particle size of from 10 nm to 100 nm; and the titanium dioxide particles comprise mesopores having a pore size of from 5 nm to 30 nm.

In some optional embodiments, the adsorbent has a specific surface area of from 30m²/g to 100 m²/g. In some optional embodiments, the adsorbent has a specific surface area of from 31m²/g to 97 m²/g; the plurality of nanoparticles have an average particle size of from 12 nm to 96 nm; and the mesopores have a pore size of from 5.7 nm to 19 nm. In some optional embodiments, the adsorbent has a specific surface area of from 30m²/g to 100 m²/g. In some optional embodiments, the adsorbent has a specific surface area of from 31m²/g to 97 m²/g; the plurality of nanoparticles have an average particle size of from 12 nm to 96 nm; and the mesopores have a pore size of from 5.7 nm to 19 nm.

In some optional embodiments, the adsorbent has a crystal phase of anatase type.

In some optional embodiments, the adsorbent has an average particle size of from 10 µm to 300 µm.

In some optional embodiments, the adsorbent has a pore volume of from 0.1 cm³/g to 0.5 cm³/g.

In some optional embodiments, the adsorbent comprises: one or more of the titanium dioxide particles having an average particle size of from 30 µm to 60 µm, the titanium dioxide particles having an average particle size of from 50 µm to 100 µm, the titanium dioxide particles having an average particle size of from 75 µm to 150 µm, and the titanium dioxide particles having an average particle size of from 90 µm to 180 µm.

In some optional embodiments, the titanium dioxide particles are subjected to any one or more of oscillation, vortex, and ultrasonic treatments to smoothen their surface.

In the second aspect, the embodiments of the present application provide a preparation method of the titanium dioxide adsorbent for ⁶⁸Ge-⁶⁸Ga generator, wherein the adsorbent is prepared by sol-gel, and the method comprises the following steps:

Dissolving a titanium source by an organic alcohol and adding glacial acetic acid, to obtain a titanium source solution;

Adding the titanium source solution dropwise to a purified water solution while stirring, then standing to obtain a first gel, and heating and heat preserving and recrystallizing the first gel to obtain a second gel;

Shaping the second gel by first calcination, then grinding and screening to obtain solid particles with a particle size of from 10 µm to 300 µm, and surface modifying the solid particles, followed by second calcination, to obtain the adsorbent.

In some optional embodiments, the stirring while adding dropwise has a stirring speed of from 10 rpm 100 rpm, and the adding dropwise has an adding rate of from 1 mL/min to 100 mL/min.

In some optional embodiments, a volume ratio of the titanium source solution to the purified water is 1 : (0.5-10);

In some optional embodiments, the heating and heat preserving is carried out at a temperature of from 110°C to 180°C for 6 h to 36 h.

In some optional embodiments, surface modifying the solid particles is carried out by ultrasonic treatment at an ultrasonic power of from 50 W to 1000W for 0.5 h to 12 h.

In some optional embodiments, the step of shaping the second gel by first calcination, then grinding and screening to obtain solid particles with a particle size of from 10 µm to 300 µm, and surface modifying the solid particles, followed by second calcination, to obtain the adsorbent, comprises: Shaping the second gel by first calcination, then grinding and screening to obtain solid particles with a particle size of from 30 µm to 60 µm, from 50 µm to 100 µm, from 75 µm to 150 µm and from 90 µm to 180 µm, followed by second calcination, to obtain the adsorbent.

In some optional embodiments, the temperature for the first calcination is from 300°C to 700°C and the temperature for the second calcination is from 400°C to 700°C.

In some optional embodiments, the time for the first calcination is from 1 h to 12 h and the time for the second calcination is from 1 h to 6 h.

In the third aspect, embodiments of the present application provide a germanium [⁶⁸Ge]-gallium [⁶⁸Ga] generator, comprising:
Packed cylinder filled with the adsorbent according to the first aspect or the adsorbent prepared by the preparation method according to the second aspect, wherein the adsorbent adsorbs ⁶⁸Ge element;
In some optional embodiments, the material of the packed cylinder is one or more of a plastic chromatography column, a glass tube, and a quartz tube.

The invention has the following beneficial effects:
1) In embodiments of the present application, an adsorbent is a titanium dioxide particulate material, wherein any titanium dioxide particle is formed by a plurality of nanoparticles bound to each other. When the nanoparticles have a pore size of from 5 nm to 30 nm, on the one hand, the titanium dioxide particles can have a relatively large and suitable specific surface area, and the increased adsorption capacity of ⁶⁸Ge; On the other hand, the titanium dioxide particles have suitable pore volume or adsorption sites, which allows to accommodate a large amount of molecules or ions containing ⁶⁸Ge element and better adsorb ⁶⁸Ge element, and at the same time, the titanium dioxide particles can better release ⁶⁸Ga during elution, reducing the residue of ⁶⁸Ga element in titanium dioxide particles and improves the elution efficiency.
2) The plurality of nanoparticles are independent small particles with certain mechanical strength during the preparation process; and the plurality of nanoparticles can stably exist in an acid elution environment. This avoids the embrittlement of the edge portion of the titanium dioxide particles integrally formed in the related art. The constitution in which the plurality of nanoparticles are bound to each other provides the titanium dioxide particles with good structural stability, reduces the risk of ⁶⁸Ge element leakage caused by the embrittlement of the edge portion of the titanium dioxide particles, and reduces the breakthrough rate.
3) In the present application, the improved sol-gel method is adopted to prepare the titanium dioxide adsorbent. On the one hand, the process is very simple, environmentally friendly, without the risk of introducing other metal ions, and the preparation is efficient and convenient, so the titanium dioxide adsorbent can be produced by a large-scale process; On the other hand, it overcomes the problem that the titanium dioxide prepared by the sol-gel method in the prior art is at nano-scale and cannot be used as an adsorbent for a germanium-gallium generator, so that the titanium dioxide particles prepared by the sol-gel method are at micron-scale and have excellent performance when used as an adsorbent for a germanium-gallium generator.
4) That adsorbent prepared by the present application (that is, the titanium dioxide particles) is composed of 10 nm - 100 nm nanoparticles, and has a specific surface area of from 30 m²/g to 100m²/g, a pore size of from 5 nm to 30 nm, and smooth surface. Using it as an adsorbent for a ⁶⁸Ge-⁶⁸Ga generator significantly improves the performance of ⁶⁸Ge-⁶⁸Ga generator. Especially for the activity range above 30 mCi, the ⁶⁸Ge breakthrough rate is reduced to about 0.0001%, and the initial elution efficiency of ⁶⁸Ga is increased to 75% or more and can be maintained at 70% or more after multiple elutions.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on these drawings without creative work.

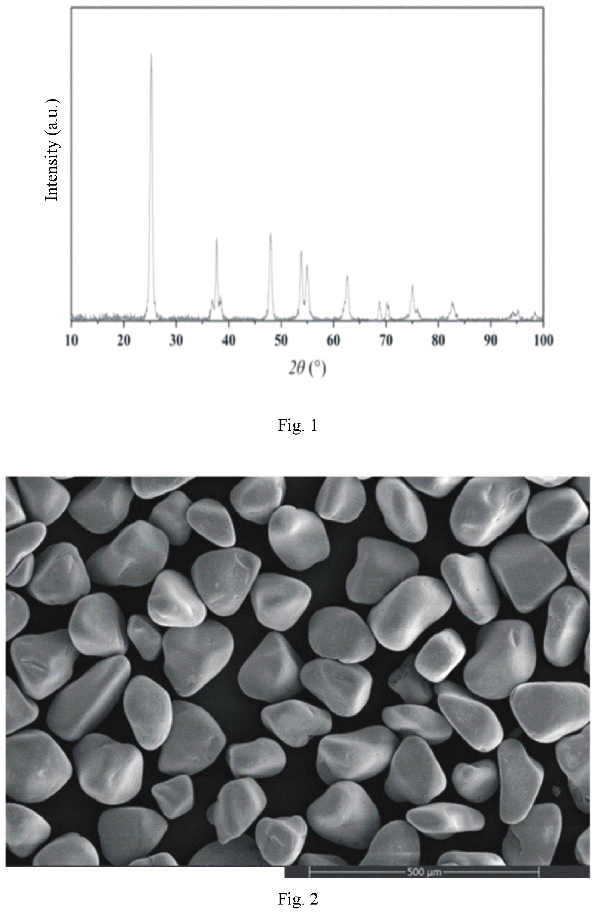

Fig. 1 shows an X-ray diffraction pattern of a modified TiO₂ particulate material of an example of the present application;
Fig. 2 shows an Scanning Electron Microscope (SEM) image of a modified TiO₂ particulate material of the example of the present application;

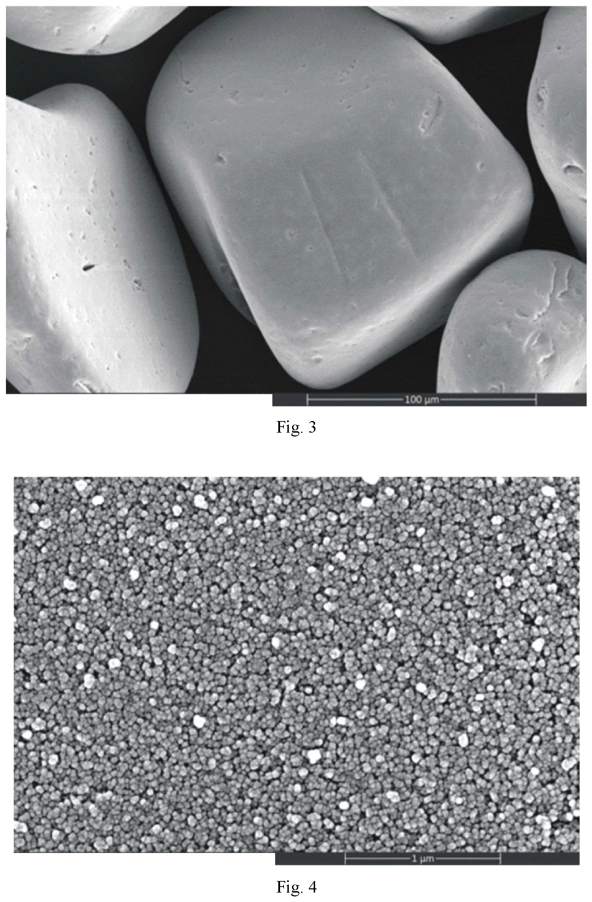

Fig. 3 shows an Scanning Electron Microscope (SEM) image of a modified TiO₂ particulate material of the example of the present application;
Fig. 4 shows an Scanning Electron Microscope (SEM) image of a modified TiO₂ particulate material of the example of the present application;
Fig. 5 shows the change in elution efficiency and linear fitting graph of a 50 mCi ⁶⁸Ge-⁶⁸Ga generator in an example of the present application for 200 days;
Fig. 6 shows a graph of the change in long-term elution efficiency of an 85mCi ⁶⁸Ge-⁶⁸Ga generator in an example of the present application.

In the drawings, the drawings are not necessarily drawn to scale.

### Detailed description

Hereinafter, with appropriate reference to the accompanying drawings, the embodiments which specifically disclose the adsorbent for germanium [⁶⁸Ge]-gallium [⁶⁸Ga] generator, the preparation method therefor and the germanium [⁶⁸Ge]-gallium [⁶⁸Ga] generator of the present application are described in detail. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprise steps (a), (b) and (c), steps (a), (c) and (b), or steps (c), (a) and (b), and the like.

"A plurality of" or "multiple" appearing in the present application means two or more (including two). "A plurality of" or "multiple" or "several" appearing in the present application means two or more (including two). "A plurality of items" or "multiple items" or "several items" appearing in the present application means two or more items (including two items).

The term "elution efficiency" refers to the ratio of the actual amount of ⁶⁸Ga collected after elution with an eluent to theoretical amount, following the decay of the parent nuclide ⁶⁸Ge into the daughter nuclide ⁶⁸Ga.

The term "breakthrough rate" refers to the breakthrough rate of ⁶⁸Ge during elution with an eluent, which is the activity of ⁶⁸Ge in the liquid divided by the activity of ⁶⁸Ga.

The term "specific surface area" refers to the total area per unit mass of adsorption material, which can be measured by a gas adsorption method.

The term "particle size" or "particle diameter" of titanium dioxide particles refers to the size or diameter of titanium dioxide particles, which can be measured using a laser particle size analysis instrument. It is understood that titanium dioxide microparticles are formed by aggregating nanoparticles.

The term "nanoparticles" refers to nano-scale titanium dioxide particles that aggregate to form titanium dioxide microparticles.

The term "pore size" or "pore diameter" refers to the diameter or width of a pore, which is a measure of the size of the pore and can be measured using instruments such as specific surface area and porosity analyzers. For example, for the size of the internal pores of micron-scale titanium dioxide (micron-scale titanium dioxide is formed by the aggregation of nano-scale titanium dioxide particles), the term "pore size" is the size of the pores between and inside nano-scale titanium dioxide particles.

In the first aspect, the embodiments of the present application provide an adsorbent for germanium [⁶⁸Ge]-gallium [⁶⁸Ga] generator, wherein the adsorbent is used for adsorbing ⁶⁸Ge element; the adsorbent comprises a plurality of titanium dioxide particles, and the titanium dioxide particles consist of a plurality of nanoparticles, and the plurality of nanoparticles have an average particle size of from 10 nm to 100 nm; and the nanoparticles comprise mesopores having a pore size of from 5 nm to 30 nm.

The pore size of the mesopores may be any number of 5 nm, 10 nm, 15 nm, 20 nm, 25 nm, and 30 nm, or a range formed thereby.

In embodiments of the present application, the adsorbent is a titanium dioxide particle material, wherein any titanium dioxide particle is formed by a plurality of nanoparticles bound to each other, the plurality of nanoparticles are independent small particles with certain mechanical strength during the preparation process; and the plurality of nanoparticles can stably exist in an acid elution environment. This avoids the embrittlement of the edge portion of the titanium dioxide particles integrally formed in the related art. The constitution in which the plurality of nanoparticles are bound to each other provides the titanium dioxide particles with good structural stability, and reduces the risk of ⁶⁸Ge element leakage caused by the embrittlement of the edge portion of the titanium dioxide particles.

When the average diameter of the nanoparticles is excessively small, in the process of preparing titanium dioxide particles, the nanoparticles with excessively small particle sizes are relatively soft and have small internal pore sizes, and they tend to agglomerate tightly with multiple other nanoparticles, making it difficult to obtain titanium dioxide particles with a certain specific surface area and a suitable pore size. However, when the average particle size of the nanoparticles is excessively large, in the process of preparing and using titanium dioxide particles, the nanoparticles with excessively large particle sizes tend to deform or even break, and have relatively small cohesive strength, making it difficult to form titanium dioxide particles with certain mechanical strength and appropriate specific surface area. Thus the nanoparticles in the titanium dioxide particles have an average particle size of from 10 nm to 100 nm; The nanoparticles may have a size in the range of 10 nm, 20 nm, 50 nm, 60 nm, 80 nm, 100 nm, or from 10 nm to 30 nm, from 20 nm to 60 nm, or from 50 nm to 100 nm; The nanoparticles may have a pore size in the range of 5 nm, 10 nm, 15 nm, 20 nm, 30 nm, or from 5 nm to 10 nm, from 10 nm to 25 nm, or from 20 nm to 30 nm. In some optional embodiments, the plurality of nanoparticles have an average particle size of from 10 µm to 300 µm.

It should be noted that, unless otherwise specified, the average particle size of nanoparticles in the titanium dioxide particles in the present application refers to the average particle size of nanoparticles calculated by taking 200 nanoparticles and performing statistical analysis when the prepared titanium dioxide particles are observed through a scanning electron microscope (SEM).

It has been found through research that if titanium dioxide particles composed of nanoparticles are applied to germanium [⁶⁸Ge]-gallium [⁶⁸Ga] generators, when the nanoparticles have a pore size of from 5 nm to 30 nm, on the one hand, the titanium dioxide particles can have a relatively large and suitable specific surface area, and the increased adsorption capacity of ⁶⁸Ge; On the other hand, the titanium dioxide particles have relatively high pore volume or adsorption sites, which allows to accommodate a large amount of molecules or ions containing ⁶⁸Ge element and better adsorb ⁶⁸Ge element, and at the same time, the titanium dioxide particles can better release ⁶⁸Ga during elution, reducing the residue of ⁶⁸Ga element in titanium dioxide particles and improves the elution efficiency.

In some optional embodiments, the plurality of nanoparticles have a specific surface area of from 30m²/g to 100 m²/g.

For example, the specific surface area may be 30 m²/g, 40 m²/g, 70 m²/g, 85 m²/g, 100 m²/g, and may also be in a range of from 30 m²/g to 50 m²/g, from 50 m²/g to 100 m²/g, from 80 m²/g to 100 m²/g.

In embodiments of the present application, the titanium dioxide particle having the specific surface area in the above range can better adsorb ⁶⁸Ge element.

In some optional embodiments, the adsorbent has a specific surface area of from 31m²/g to 97 m²/g; the plurality of nanoparticles have an average particle size of from 12 nm to 96 nm; and the mesopores have a pore size of from 5.7 nm to 19 nm. Therefore, the above-mentioned adsorbent can further improve the elution efficiency and reduce the breakthrough rate.

In some optional embodiments, the adsorbent has a crystal phase of anatase type. In embodiments of the present application, the anatase-type titanium dioxide particles have a relatively large and more suitable specific surface area and a better pore structure, which improves the adsorption of ⁶⁸Ge element and its ⁶⁸Ga-release effect.

In some optional embodiments, the adsorbent has an average particle size of from 10 µm to 300 µm.

It can be understood that the adsorbent having the particle size of from 10 µm to 300 µm in the present application means that the particle size of the titanium dioxide particles can be any specific particle size in the range of from 10 µm to 300 µm, such as 10 µm, 50 µm, 100 µm, 150 µm, 200 µm, 250 µm, 300 µm, or any range of particle size in the range of from 10 µm to 300 µm, for example in a range of from 10 µm to 50 µm, from 30 µm to 60 µm, from 50 µm to 150 µm, from 20 µm to 200 µm, 130 µm to 260 µm, 200 µm to 300 µm; Preferably, the particle size is in a range of from 30 µm to 60 µm, from 50 µm to 100 µm, from 75 µm to 150 µm, from 90 µm to 180 µm.

In some optional embodiments, the adsorbent has a pore volume of from 0.1 cm³/g to 0.5 cm³/g.

Alternatively, the pore volume of the titanium dioxide particles may be any numerical value of 0.1 cm³/g, 0.2 cm³/g, 0.3 cm³/g, 0.4 cm³/g, 0.5 cm³/g or in a range formed thereby. Therefore, the plurality of titanium dioxide particles having the pore volume within the above ranges is conducive to providing sufficient sites for binding with ⁶⁸Ge element. Even if the ⁶⁸Ge element is washed away during the elution process, the titanium dioxide particles can provide sufficient sites to re-realize the adsorption of ⁶⁸Ge; The plurality of titanium dioxide particles having the pore volume within the above ranges facilitate the release of ⁶⁸Ga element in multiple regions under appropriate eluting conditions during elution, thereby improving the yield of ⁶⁸Ga and improving the elution efficiency.

In some optional embodiments, the adsorbent comprises: one or more of the titanium dioxide particles having an average particle size of from 30 µm to 60 µm, the titanium dioxide particles having an average particle size of from 50 µm to 100 µm, the titanium dioxide particles having an average particle size of from 75 µm to 150 µm, and the titanium dioxide particles having an average particle size of from 90 µm to 180 µm.

In some optional embodiments, the titanium dioxide particles are subjected to any one or more of oscillation, vortex, and ultrasonic treatments to smoothen their surface. Treatments such as oscillation, vortex, ultrasound and any combination thereof can further smoothen the surface of the titanium dioxide particles (that is, the particles usually have rounded edges, and fewer sharp edges and corners). Generally speaking, the sharp edges and corners of the titanium dioxide particles contain a certain amount of ⁶⁸Ge. During the elution process of the adsorbent, the sharp edges and corners are broken, causing washing out the ⁶⁸Ge. So the titanium dioxide particles have smooth surface, which is beneficial for reducing ⁶⁸Ge breakthrough phenomenon and improving the elution efficiency of ⁶⁸Ge-⁶⁸Ga generators.

In the second aspect, the embodiments of the present application provide a preparation method of the titanium dioxide adsorbent for ⁶⁸Ge-⁶⁸Ga generator, wherein the adsorbent is prepared by sol-gel, and the method comprises the following steps:
Dissolving a titanium source by an organic alcohol and adding glacial acetic acid, to obtain a titanium source solution;
Adding the titanium source solution dropwise to a purified water solution while stirring, then standing to obtain a first gel, and heating and heat preserving and recrystallizing the first gel to obtain a second gel;
Shaping the second gel by first calcination, then grinding and screening to obtain solid particles with a particle size of from 10 µm to 300 µm, and surface modifying the solid particles, followed by second calcination, to obtain the adsorbent.

In the present embodiments, the preparation method of titanium dioxide is a sol-gel method, comprising the following steps: Dissolving a titanium source by an organic alcohol and adding glacial acetic acid, to obtain a titanium source solution; Adding the titanium source solution dropwise to a purified water solution while stirring, then standing to obtain a first gel, and heating and heat preserving and recrystallizing the first gel to obtain a second gel; Shaping the second gel by first calcination, then grinding and screening to obtain solid particles with a particle size of from 10 µm to 300 µm, and surface modifying the solid particles, followed by second calcination, to obtain the adsorbent.

In embodiments of the present application, the second gel can be understood as a gel that is slowly concentrated and recrystallized under heating conditions, and form a gel in a dry state (that is, crystalline particles) after a large amount of solvent is finally removed.

In the embodiments, the titanium source solution is particularly prepared by a conventional sol-gel method, that is, a titanium source (for example, tetraethyl titanate, tetraisopropyl titanate, tetrabutyl titanate) is dissolved in an organic alcohol solution, and then an inhibitor (for example, glacial acetic acid) is added to inhibit the hydrolysis of the titanium source and to form a titanium source solution. The present application is not particularly limited, and only preferred embodiments are provided.

In some optional embodiments, the titanium source solution is prepared by the method comprising the steps of:
S1. Dissolving a titanium source (such as tetraethyl titanate, tetraisopropyl titanate, tetrabutyl titanate, tetrahexyl titanate) in C₂-C₅ alcohol solution, followed by mixing evenly, to obtain a clear and transparent solution. The purpose of this step is to dissolve the titanium source. The volume ratio for the titanium source to the C₂-C₅ alcohol solution is preferably 2 : (0.5-20). The titanium source is preferably tetraisopropyl titanate, tetrabutyl titanate, and the alcohol solution is preferably isopropanol. When the alcohol solution is isopropanol, the volume ratio of the titanium source to isopropanol is more preferably 1 : (3 to 6).
S2, adding the obtained clear and transparent solution dropwise to glacial acetic acid while stirring to obtain a white turbid solution, and allowing to stand for a period of time, a clear and transparent solution is obtained, which is a titanium source solution. The purpose of this step is to inhibit the hydrolysis of titanium source. The volume ratio of the titanium source to the glacial acetic acid is preferably in the range of 1 : (0.5-10), and more preferably 1 : 1.

The existing technology generally adopts sulfuric acid method, chlorination method and the like to prepare titanium dioxide, which has complicated process, high energy consumption, and many wastes, and produces titanium dioxide that has high metal impurity content and complex crystal form, and cannot be used as an adsorption filler for ⁶⁸Ge-⁶⁸Ga generator. US10357758B2 discloses that titanium dioxide of adsorption filler by the ⁶⁸Ge-⁶⁸Ga generator has an initial adsorption efficiency of 75%, and the elution efficiency of long-term elution remains stable at about 65%. At the same time, it can be seen from the data disclosed in the existing technology, on the premise that the ⁶⁸Ge breakthrough rate satisfies the requirements of European Pharmacopoeia standard for gallium [⁶⁸Ga] chloride solution (≤ 0.001%), the elution efficiency of ⁶⁸Ga is generally not higher than 75%, and there may be a significant decrease in elution efficiency after multiple elutions. The sol-gel preparation method is simple, fast, environmentally friendly, and has no risk of introducing other metal ions, so it has gradually become the focus of attention of technicians. However, the titanium dioxide prepared by the sol-gel method of the prior art is generally at nano-scale. This is because after the titanium source is treated by with the organic alcohol and the inhibitor to form a titanium source solution, the titanium source aggregates in the purified water to form sol particles of about 1 nm. Although the sol particles further grow to form a gel during standing, the gel is only a overlap between the sol particles, and its essence is still nano-scale titanium dioxide hydrate. Therefore, after the gel is directly dried, calcinated and ground, 80% of the obtained titanium dioxide is at nano-scale. Since the particle diameter of the titanium dioxide is too small, after filling into the chromatographic column, such titanium dioxide easily causes the excessively high column pressure of the chromatographic column, increasing the elution loss rate and ⁶⁸Ge breakthrough rate. When glacial acetic acid is used as an inhibitor, although some micron-scale titanium dioxide particles can be screened (formed by aggregation of nano-scale titanium dioxide particles), the yield is generally lower than 20% and is unstable, and at the same time, the adsorption performance and breakthrough rate of micron-scale titanium dioxide particles also fail to satisfy the requirements.

Based on this, in the present application, a secondary gelation is performed in the gelation stage of the titanium source, wherein the first gel is heated and heat preserved to induce its recrystallization, thus the first gel formed by aggregation and growth of nano-scale sol particles undergoes secondary heating and heat preserving, which causes the gel particles to aggregate by particle size and form a second gel. This ensures that the titanium dioxide, after calcination and grinding, exists in a micron-scale particle size.

It should be noted that, to make the titanium dioxide have a micron-scale particle size, the inhibitor for preparing the titanium source solution needs to be limited to glacial acetic acid. In the existing technology, the inhibitor generally includes glacial acetic acid, ethanolamine, ammonia water, acetylacetone, etc., but the applicant has found that when other inhibitors are added, even with secondary gelation, it is impossible to screen to obtain micron-scale titanium dioxide that meets the requirements, and only when the inhibitor is glacial acetic acid can the above requirements be satisfied.

However, the applicant has further found that under the premise that the inhibitor is glacial acetic acid, whether for the primary gelation or the secondary gelation, the breakthrough rate and elution efficiency of micron-scale titanium dioxide screened after first calcination are not ideal.

This is because the micron-scale titanium dioxide obtained by first calcination is obtained by further aggregating nano-scale titanium dioxide during secondary gelation. Under the condition of primary calcination, the nano-scale titanium dioxide crystal grains that aggregate to form micron-scale titanium dioxide are too small. This results in too large specific surface area of the material and too many surface active sites, leading to high adsorption capacity of the material for both germanium and gallium and making it difficult to achieve separation effect. On the other hand, a large number of extremely fine particles adhere to the surface of titanium dioxide obtained after first calcination, resulting in rough grain surface and increased specific surface area. Moreover, the extremely fine particles are not firmly adhered, and they are washed out with the eluent during elution, resulting in a significant increase in ⁶⁸Ge breakthrough and affecting the ⁶⁸Ga elution efficiency and the stability after multiple elutions.

In view of the above problems, the applicant has found that under the premise of forming micron-scale titanium dioxide, the titanium dioxide composed of nano-scale titanium dioxide particles in the range of from 10 nm to 100 nm has the particle size of from 10 µm to 300 µm, and has a specific surface area of from 30 m²/g to 100m²/g, a pore size of from 5 nm to 30 nm, and has smooth surface and a crystal phase of anatase type. As such, the performance of the adsorbent of the ⁶⁸Ge-⁶⁸Ga generator will be greatly improved.

Based on this, in the present application, surface modification is performed on the titanium dioxide obtained after the first calcination to smoothen the surface of the titanium dioxide particles while removing the extremely fine particles on the surface. Then, secondary calcination is performed. Through these two calcinations, in the resulting micron-scale titanium dioxide, nano-scale titanium dioxide particles that aggregate to form micron-scale titanium dioxide has a particle size of from 10 nm to 100 nm and a pore size of from 5 nm to 30 nm, and the specific surface area is from 30 m²/g to 100 m²/g, and the surface is smooth in anatase phase. When this titanium dioxide is used as an adsorbent for ⁶⁸Ge-⁶⁸Ga generator, the Ge breakthrough rate is reduced to about 0.0001% under different ⁶⁸Ge loading activities, and the initial elution efficiency of ⁶⁸Ga is increased to 75% or more, and can be maintained at 70% or more after multiple elutions.

In the above embodiment, the particle size of nano-scale titanium dioxide particles that aggregate to form micron-scale titanium dioxide is controlled to the size range of from 10 nm to 100 nm. This is because the titanium dioxide nanoparticles in this size range contain a large number of grain boundaries, which can eliminate crystal defects. They are more radiation resistant than crystal grains in the size range larger than 100 nm, which improves the performance of micron-scale titanium dioxide. However, the above-mentioned titanium dioxide particles have adsorption capacity for both ⁶⁸Ge and ⁶⁸Ga. Therefore, it is necessary to control the pore size range of the nano-scale titanium dioxide to be in a range of from 5 nm to 30 nm and the specific surface area to be in a range of from 30 m²/g to 100 m²/g to increase the adsorption selectivity for ⁶⁸Ge over ⁶⁸Ga. This enables the titanium dioxide adsorbent to enhance the adsorption capacity for ⁶⁸Ge while reducing as much as possible the adsorption for ⁶⁸Ga, thus exhibiting the characteristics of improved ⁶⁸Ga elution efficiency and reduced ⁶⁸Ge breakthrough rate.

Thus, the prepared titanium dioxide adsorbent meets the criteria of having a particle size of from 10 µm to 300 µm, being composed of titanium dioxide nanoparticles of from 10 nm to 100 nm, and having a specific surface area of from 30 m²/g to 100 m²/g, a pore size of from 5 nm to 30 nm, and smooth surface. When it is used as an adsorbent for a ⁶⁸Ge-⁶⁸Ga generator, the ⁶⁸Ge breakthrough rate is reduced to about 0.0001% under different ⁶⁸Ge loading activities, and the initial elution efficiency of ⁶⁸Ga is increased to 75% or more and can be maintained at 70% or more after multiple elutions.

In some optional embodiments, in adding the titanium source solution dropwise to the purified water solution during the titanium source gelation step, the stirring speed needs to be controlled to be in a range of from 10 rpm 100 rpm, and the adding rate needs to be controlled to be in a range of from 1 mL/ min to 100 mL/min. This is because the stirring speed and the adding time also have certain influence on the particle size of the sol particles. Reasonably controlling the stirring speed and the adding time is beneficial to increasing the particle size of the sol particles that form the first gel, thereby shortening the time for the sol particles to grow from nanometer to micron when forming the second gel, and increasing the amount of micron-scale titanium dioxide after grinding. In this embodiment, the amount of addition of the titanium source solution and the purified water can be conventionally determined and selected by those skilled in the art, and the volume ratio of the titanium source solution and the purified water is preferably 1 : (0.5-10) in this application.

In some optional embodiments, the temperature for heating and heat preserving during forming the second gel is from 110°C to 180°C for 6 h to 36 h. The temperature and time of heating and heat preserving affect the growth rate and size of sol particles from nano-scale to micron-scale, and those skilled in the art knowing the technical principles of the present application would make conventional selections according to the desired size of sol particles. However, in the present application, since it is necessary to obtain more titanium dioxide of from 10 microns to 300 microns, the temperature for heat preserving is preferably from 110°C to 180°C, and the time for heat preserving is preferably from 6 h to 36 h.

In some optional embodiments, the purpose of the surface modification is to obtain a smooth surface and remove extremely fine particles of titanium dioxide on the surface at the same time, which can be performed by oscillation, vortex, ultrasonic, etc. In the present application, preferably, ultrasonic is used with the ultrasonic power of from 50W to 1000W and the time of from 0.5 h to 12 h.

In embodiments of the present application, the adsorbent of titanium dioxide particles prepared by oscillation, vortex, ultrasonic, etc. has smooth surface, indicating that there are few or no tiny particles adsorbed on its surface, and it has certain acid washing resistance. Using this adsorbent for a germanium [⁶⁸Ge]-gallium [⁶⁸Ga] generator has good elution efficiency and extremely low ⁶⁸Ge amount in the obtained ⁶⁸Ga containing solution, which improves the reliability of the ⁶⁸Ga containing solution.

In some optional embodiments, the solid particles having particle sizes of from 30 µm to 60 µm, from 50 µm to 100 µm, from 75 µm to 150 µm, and from 90 µm to 180 µm are ground and screened. The applicant has found that the combination of the above particle sizes can further enhance the performance of titanium dioxide as an adsorbent.

In some optional embodiments, the titanium dioxide is subjected to oscillation, vortex, ultrasonic treatments and/or the like to smoothen the surface of particles of titanium dioxide.

In some optional embodiments, the temperature for the first calcination is from 300°C to 700°C and the temperature for the second calcination is from 400°C to 700°C. The applicant has found that the temperature and time for the calcination affect the specific surface area of titanium dioxide. The above-mentioned temperature for calcination enables the maximum attainment of titanium dioxide with a specific surface area of from 30 m²/g to 100 m²/g; The time for calcination is preferably from 1 h to 12 h for the first calcination and from 1 h to 6 h for the second calcination.

It will be understood that after the formation of the second gel, in order to remove the residual solvent on the surface of the gel, the step of further heating the second gel in an oven as disclosed in a conventional sol-gel method is further included to remove the residual solvent, and the drying temperature is preferably from 110°C to 180°C, for the purpose of removing the residual organic alcohol and glacial acetic acid on the surface.

It will be understood that during the surface modification, solid particles need to be placed in a purified water solution to facilitate removal of extremely fine particles by oscillation and to smoothen surface. In order to enhance its effect, the purified water can also be conventionally replaced with 0.1 mol/L hydrochloric acid solution, and at the same time, after the surface modification, it may be necessary to dry the surface, and the drying temperature is preferably from 110°C to 180°C.

In the third aspect, embodiments of the present application provide a germanium [⁶⁸Ge]-gallium [⁶⁸Ga] generator, comprising:
Packed cylinder filled with the adsorbent according to the first aspect or the adsorbent prepared by the preparation method according to the second aspect, wherein the adsorbent adsorbs ⁶⁸Ge element.

The adsorbent and the preparation method of any of the above embodiments can be used in the ⁶⁸Ge-⁶⁸Ga generator of the embodiments of the present application, and details are not repeated herein.

In some optional embodiments, the adsorbent has a particle size of from 10 µm to 300 µm, is composed of nanoparticles of from 10 nm to 100 nm, and has a specific surface area of from 30 m²/g to 100 m²/g, the pore size of from 5 nm to 30 nm, and smooth surface, and the particulate titanium dioxide is anatase phase.

The applicant has found that the titanium dioxide adsorbent satisfying the above performance criteria has better adsorption performance, which can reduce the ⁶⁸Ge breakthrough rate of the ⁶⁸Ge-⁶⁸Ga generator to about 0.0001%, and increase elution efficiency of ⁶⁸Ga to 75% or more, up to 86%, under the activity range of from 30 mCi to 85 mCi, and maintain the elution efficiency at 70% or more after multiple elutions.

It can be understood that the adsorbent having the particle size of from 10 µm to 300 µm in the present application means that the particle size of the titanium dioxide particles can be any specific particle size in the range of from 10 µm to 300 µm, such as 10 µm, 50 µm, 100 µm, 150 µm, 200 µm, 250 µm, 300 µm, or any range of particle size in the range of from 10 µm to 300 µm, for example in a range of from 10 µm to 50 µm, from 30 µm to 60 µm, from 50 µm to 150 µm, from 20 µm to 200 µm, 130 µm to 260 µm, 200 µm to 300 µm; Preferably, the particle size is in a range of from 30 µm to 60 µm, from 50 µm to 100 µm, from 75 µm to 150 µm, from 90 µm to 180 µm.

The specific surface area, particle size of nanoparticles, and pore size are as described above. For example, the specific surface area may be 30 m²/g, 40 m²/g, 70 m²/g, 85 m²/g, or 100 m²/g, and may also be in a range of from 30 m²/g to 50 m²/g, from 50m²/g to 100 m²/g, or from 80 m²/g to 100m²/g.

The particle size of nanoparticles may be 10 nm, 20 nm, 50 nm, 60 nm, 80 nm, 100 nm, or in a range of from 10 nm to 30 nm, from 20 nm to 60 nm, from 50 nm to 100 nm. The pore size may be 5 nm, 10 nm, 15 nm, 20 nm, or 30 nm, or in the range of from 5 nm to 10 nm, from 10 nm to 25 nm, or from 20 nm to 30 nm.

In this embodiment, 10-300 µm particulate titanium dioxide with smooth surface can reduce the ⁶⁸Ge breakthrough rate; and specific surface area, pore size, and crystal structure interact with each other, and affect the yield of titanium dioxide of anatase phase and thus affect the ⁶⁸Ga elution efficiency. Only when titanium dioxide satisfies the above criteria can the ⁶⁸Ge breakthrough rate of the ⁶⁸Ge-⁶⁸Ga generator be reduced, and the ⁶⁸Ga elution efficiency and elution stability be improved.

In some optional embodiments, a germanium [⁶⁸Ge]-gallium [⁶⁸Ga] generator comprises:
a housing;
a lead shield body, arranged inside the housing and sleeved outside the packed cylinder; and
a washing line for washing the packed cylinder to obtain gallium [⁶⁸Ga] element, which runs through the housing and the lead shield body, and is in communication with the packed cylinder.

In some optional embodiments, the material of the packed cylinder is a plastic chromatography column, a glass tube, a quartz tube or the like.

In some optional embodiments, the ⁶⁸Ge-⁶⁸Ga generator further comprises an elution pipeline and a lead shield body.

In some optional embodiments, the ⁶⁸Ge-⁶⁸Ga generators are divided into different levels according to the different activities of the loaded ⁶⁸Ge. For example, according to the different activities of the loaded ⁶⁸Ge, a ⁶⁸Ge-⁶⁸Ga generator of 30 mCi, 50 mCi, or 80 mCi can be obtained.

It should be noted that that above loading activities are only the preferred loading activities of the present application, and should not be interpreted as a limitation on the loading activity. The titanium dioxide prepared in the present application has excellent performance and can be used for preparing ⁶⁸Ge-⁶⁸Ga generators different loading activities such as micro-Curie level, milli-Curie level and hundred-milli-Curie level.

In order to make the object, technical solution, and advantages of the present invention more clearly understood, the present invention will be described in more detail below with reference to the following Examples. It should be understood that the specific Examples described herein are merely for illustration of the invention and are not intended to limit the scope of the invention.

Unless otherwise specified, the reagents, methods and apparatus employed in the present invention are conventional reagents, methods and apparatus in the art.

### Example 1

### Preparation of titanium dioxide adsorbent

1. 50 mL of tetrabutyl titanate was added dropwise to 200 mL of isopropanol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 200 mL of purified water at a stirring speed of 55 revolutions per minute and an adding speed of 5 mL/min while stirring. After being placed at room temperature for 24 hours, the mixture was converted into a first gel. The first gel was placed in an air circulation oven and heated and heat preserved to 150°C for 24 hours, to obtain a second gel.
3. The second gel was placed in a muffle furnace, heated up to 400°C at a heating rate of 5°C/min, calcinated for 4h, and naturally cooled at room temperature. The product was taken out, ground in a mortar, passed through a mesh sieve for screening solid particles in the range of from 50 µm to 180 µm.
4. The screened solid particles were placed in 0.1 M HCl solution, ultrasonicated for 2 h with ultrasonic power of 200 W, rinsed to remove extremely fine particles, washed for multiple times, dried in an oven at a drying temperature of 150°C. The dried solid particles were placed in a muffle furnace, heated to 500°C at a heating rate of 5°C/min, calcinated for 3 h, naturally cooled at room temperature, and taken out to obtain the titanium dioxide adsorbent.

### Example 2

### Preparation of titanium dioxide adsorbent

1. 50 mL of tetrabutyl titanate was added dropwise to 200 mL of absolute ethanol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 1500 mL of purified water at a stirring speed of 10 revolutions per minute and an adding speed of 50 mL/min while stirring. After being placed at room temperature for 24 hours, the mixture was converted into a first gel. The first gel was placed in an air circulation oven and heated and heat preserved to 110°C for 26 hours, to obtain a second gel.
3. The second gel was placed in a muffle furnace, heated up to 300°C at a heating rate of 5°C/min, calcinated for 1h, and naturally cooled at room temperature. The product was taken out, ground in a mortar, passed through a mesh sieve for screening solid particles in the range of from 10 µm to 300 µm.
4. The screened solid particles were placed in 0.1 M HCl solution, ultrasonicated for 6 h with ultrasonic power of 50 W, rinsed to remove extremely fine particles, washed for multiple times, dried in an oven at a drying temperature of 150°C. The dried solid particles were placed in a muffle furnace, heated to 400°C at a heating rate of 5°C/min, calcinated for 1 h, naturally cooled at room temperature, and taken out to obtain the titanium dioxide adsorbent.

### Example 3

### Preparation of titanium dioxide adsorbent

1. 50 mL of tetrabutyl titanate was added dropwise to 200 mL of n-butanol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 3000 mL of purified water at a stirring speed of 100 revolutions per minute and an adding speed of 100 mL/min while stirring. After being placed at room temperature for 24 hours, the mixture was converted into a first gel. The first gel was placed in an air circulation oven and heated and heat preserved to 180°C for 36 hours, to obtain a second gel.
3. The second gel was placed in a muffle furnace, heated up to 700°C at a heating rate of 5°C/min, calcinated for 12h, and naturally cooled at room temperature. The product was taken out, ground in a mortar, passed through a mesh sieve for screening solid particles in the range of from 75 µm to 150 µm.
4. The screened solid particles were placed in 0.1 M HCl solution, ultrasonicated for 12 h with ultrasonic power of 1000 W, rinsed to remove extremely fine particles, washed for multiple times, dried in an oven at a drying temperature of 150°C. The dried solid particles were placed in a muffle furnace, heated to 700°C at a heating rate of 5°C/min, calcinated for 6 h, naturally cooled at room temperature, and taken out to obtain the titanium dioxide adsorbent.

### Example 4

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 800 mL of purified water at a stirring speed of 80 revolutions per minute and an adding speed of 20 mL/min while stirring. After being placed at room temperature for 24 hours, the mixture was converted into a first gel. The first gel was placed in an air circulation oven and heated and heat preserved to 165°C for 35 hours, to obtain a second gel.
3. The second gel was placed in a muffle furnace, heated up to 550°C at a heating rate of 5°C/min, calcinated for 4.5h, and naturally cooled at room temperature. The product was taken out, ground in a mortar, passed through a mesh sieve for screening solid particles in the range of from 50 µm to 100 µm.
4. The screened solid particles were placed in 0.1 M HCl solution, ultrasonicated for 8 h with ultrasonic power of 120 W, rinsed to remove extremely fine particles, washed for multiple times, dried in an oven at a drying temperature of 150°C. The dried solid particles were placed in a muffle furnace, heated to 550°C at a heating rate of 5°C/min, calcinated for 2 h, naturally cooled at room temperature, and taken out to obtain the titanium dioxide adsorbent.

### Example 5

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 2200 mL of purified water at a stirring speed of 30 revolutions per minute and an adding speed of 70 mL/min while stirring. After being placed at room temperature for 24 hours, the mixture was converted into a first gel. The first gel was placed in an air circulation oven and heated and heat preserved to 170°C for 30 hours, to obtain a second gel.
3. The second gel was placed in a muffle furnace, heated up to 600°C at a heating rate of 5°C/min, calcinated for 8h, and naturally cooled at room temperature. The product was taken out, ground in a mortar, passed through a mesh sieve for screening solid particles in the range of from 90 µm to 180 µm.
4. The screened solid particles were placed in 0.1 M HCl solution, ultrasonicated for 1 h with ultrasonic power of 800 W, rinsed to remove extremely fine particles, washed for multiple times, dried in an oven at a drying temperature of 150°C. The dried solid particles were placed in a muffle furnace, heated to 650°C at a heating rate of 5°C/min, calcinated for 5 h, naturally cooled at room temperature, and taken out to obtain the titanium dioxide adsorbent.

### Example 6

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 1000 mL of purified water at a stirring speed of 100 revolutions per minute and an adding speed of 100 mL/min while stirring. After being placed at room temperature for 24 hours, the mixture was converted into a first gel. The first gel was placed in an air circulation oven and heated and heat preserved to 180°C for 30 hours, to obtain a second gel.
3. The second gel was placed in a muffle furnace, heated up to 300°C at a heating rate of 5°C/min, calcinated for 12h, and naturally cooled at room temperature. The product was taken out, ground in a mortar, passed through a mesh sieve for screening solid particles in the range of from 75 µm to 150 µm.
4. The screened solid particles were placed in 0.1 M HCl solution, ultrasonicated for 5 h with ultrasonic power of 50 W, rinsed to remove extremely fine particles, washed for multiple times, dried in an oven at a drying temperature of 120°C. The dried solid particles were placed in a muffle furnace, heated to 500°C at a heating rate of 5°C/min, calcinated for 5 h, naturally cooled at room temperature, and taken out to obtain the titanium dioxide adsorbent.

### Example 7

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 500 mL of purified water at a stirring speed of 10 revolutions per minute and an adding speed of 5 mL/min while stirring. After being placed at room temperature for 24 hours, the mixture was converted into a first gel. The first gel was placed in an air circulation oven and heated and heat preserved to 120°C for 30 hours, to obtain a second gel.
3. The second gel was placed in a muffle furnace, heated up to 500°C at a heating rate of 5°C/min, calcinated for 3h, and naturally cooled at room temperature. The product was taken out, ground in a mortar, passed through a mesh sieve for screening solid particles in the range of from 50 µm to 150 µm.
4. The screened solid particles were placed in 0.1 M HCl solution, ultrasonicated for 1 h with ultrasonic power of 100 W, rinsed to remove extremely fine particles, washed for multiple times, dried in an oven at a drying temperature of 130°C. The dried solid particles were placed in a muffle furnace, heated to 550°C at a heating rate of 5°C/min, calcinated for 2 h, naturally cooled at room temperature, and taken out to obtain the titanium dioxide adsorbent.

### Example 8

### Preparation of titanium dioxide adsorbent

1. 50 mL of tetrabutyl titanate was added dropwise to 200 mL of absolute ethanol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 1200 mL of purified water at a stirring speed of 13 revolutions per minute and an adding speed of 55 mL/min while stirring. After being placed at room temperature for 24 hours, the mixture was converted into a first gel. The first gel was placed in an air circulation oven and heated and heat preserved to 130°C for 26 hours, to obtain a second gel.
3. The second gel was placed in a muffle furnace, heated up to 380°C at a heating rate of 5°C/min, calcinated for 2h, and naturally cooled at room temperature. The product was taken out, ground in a mortar, passed through a mesh sieve for screening solid particles in the range of from 50 µm to 300 µm.
4. The screened solid particles were placed in 0.1 M HCl solution, ultrasonicated for 6 h with ultrasonic power of 50 W, rinsed to remove extremely fine particles, washed for multiple times, dried in an oven at a drying temperature of 130°C. The dried solid particles were placed in a muffle furnace, heated to 400°C at a heating rate of 5°C/min, calcinated for 1 h, naturally cooled at room temperature, and taken out to obtain the titanium dioxide adsorbent.

### Example 9

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 2000 mL of purified water at a stirring speed of 38 revolutions per minute and an adding speed of 95 mL/min while stirring. After being placed at room temperature for 24 hours, the mixture was converted into a first gel. The first gel was placed in an air circulation oven and heated and heat preserved to 170°C for 30 hours, to obtain a second gel.
3. The second gel was placed in a muffle furnace, heated up to 570°C at a heating rate of 5°C/min, calcinated for 8h, and naturally cooled at room temperature. The product was taken out, ground in a mortar, passed through a mesh sieve for screening solid particles in the range of from 75 µm to 180 µm.
4. The screened solid particles were placed in 0.1 M HCl solution, ultrasonicated for 2 h with ultrasonic power of 800 W, rinsed to remove extremely fine particles, washed for multiple times, dried in an oven at a drying temperature of 170°C. The dried solid particles were placed in a muffle furnace, heated to 670°C at a heating rate of 5°C/min, calcinated for 5 h, naturally cooled at room temperature, and taken out to obtain the titanium dioxide adsorbent.

### Comparative Example 1

### Preparation of titanium dioxide adsorbent

The sol-gel method of the prior art was adopted for preparation, wherein the inhibitor is selected from ammonia water (30%), in particular:
1. 50 mL of tetraisopropyl titanate was added dropwise into 200 mL of isopropanol, followed by uniformly mixing, to obtain a clear and transparent solution.
2. Ammonia water (30%) was added dropwise to the above clear and transparent solution while stirring to adjust the pH ≥ 7. The mixture was placed at room temperature for 24h to obtain a titanium source solution.
3. The titanium source solution was added dropwise to 200 mL of purified water while stirring. The mixture was placed at room temperature for 24h to be converted into the first gel. The gel was placed on a rotary evaporator for rotary evaporation at 90°C to remove the solvent.
4. The first gel was placed in a muffle furnace, heated up 400°C at a heating rate of 5°C/min, calcinated for 4 h, and naturally cooled at room temperature. The product was taken out, ground in a mortar, and passed through a mesh sieve, to give a yellow-white solid powder.

Mesh sieve results: in Comparative Example 1 using the traditional sol-gel method for preparation of titanium dioxide and limiting the inhibitor to ammonia water (30%), after grinding, the denser titanium dioxide particles in the range of from 10 µm to 300 µm cannot be screened out. As a result, the resulting titanium dioxide adsorbent is difficult to be used as an adsorption filler for nuclide generators.

### Comparative Example 2

### Preparation of titanium dioxide adsorbent

The sol-gel method of the prior art was adopted for preparation, wherein the inhibitor is selected from glacial acetic acid, in particular:
1. 50 mL of tetraisopropyl titanate was added dropwise into 200 mL of isopropanol, followed by uniformly mixing, to obtain a clear and transparent solution.
2. 50 mL of glacial acetic acid was added dropwise to the above clear and transparent solution while stirring. The mixture was placed at room temperature for 24h to obtain a titanium source solution.
3. The titanium source solution was added dropwise to 200 mL of purified water while stirring. The mixture was placed at room temperature for 24h to be converted into the first gel. The gel was placed on a rotary evaporator for rotary evaporation at 90°C to remove the solvent.
4. The first gel was placed in a muffle furnace, heated up 400°C at a heating rate of 5°C/min, calcinated for 4 h, and naturally cooled at room temperature. The product was taken out, ground in a mortar, and passed through a mesh sieve, to give a black or yellow-white solid powder.

Mesh sieve results: in Comparative Example 2 using the traditional sol-gel method for preparation of titanium dioxide and limiting the inhibitor to glacial acetic acid, after grinding, the titanium dioxide particles in the range of from 10 µm to 300 µm was screened out. The yield of 18% was too low, and there were many impurities. As a result, the resulting titanium dioxide adsorbent is difficult to be used as an adsorbent for a ⁶⁸Ge-⁶⁸Ga generator.

### Comparative Example 3

### Preparation of titanium dioxide adsorbent

The preparation method was the same as that of Example 1, except that in Comparative Example 3, the titanium dioxide particles obtained by screening (step 3) after the first calcination were used directly without the process of step 4.

### Comparative Example 4

### Preparation of titanium dioxide adsorbent

The preparation method was the same as that of Example 1, except that in Comparative Example 4, the titanium dioxide particles after ultrasonic washing and drying in step 4 were used directly without subsequent secondary calcination process.

### Comparative Example 5

### Preparation of titanium dioxide adsorbent

The preparation method was the same as that of Example 1, except that in Comparative Example 5, the titanium dioxide particles obtained by screening (step 3) after the first calcination were used directly for the secondary calcination, without the process of ultrasonic washing.

### Comparative Example 6

### Preparation of titanium dioxide adsorbent

1. 50 mL of tetrabutyl titanate was added dropwise to 200 mL of isoamyl alcohol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was poured directly to 300 mL of purified water. After being placed at room temperature for 24 hours, the mixture was converted into a first gel. The first gel was placed in an air circulation oven and heated and heat preserved to 180°C for 30 hours, to obtain a second gel.
3. The second gel was placed in a muffle furnace, heated up to 700°C at a heating rate of 5°C/min, calcinated for 12h, and naturally cooled at room temperature. The product was taken out, ground in a mortar, passed through a mesh sieve for screening solid particles in the range of from 50 µm to 150 µm.
4. The screened solid particles were placed in 0.1 M HCl solution, ultrasonicated for 5 h with ultrasonic power of 1000 W, rinsed to remove extremely fine particles, washed for multiple times, dried in an oven at a drying temperature of 160°C. After drying, the titanium dioxide adsorbent was obtained.

### Comparative Example 7

### Preparation of titanium dioxide adsorbent

1. 50 mL of tetrabutyl titanate was added dropwise to 200 mL of isopropanol, followed by mixing evenly, to obtain a clear and transparent solution. 50 mL of glacial acetic acid was added dropwise to the clear and transparent solution, and left at room temperature for 24 hours to obtain a titanium source solution.
2. The titanium source solution was added dropwise to 200 mL of purified water at a stirring speed of 55 revolutions per minute and an adding speed of 5 mL/min while stirring. After being placed at room temperature for 24 hours, the mixture was converted into a first gel. The first gel was placed in an air circulation oven and heated and heat preserved to 120°C for 24 hours, to obtain a second gel.
3. The second gel was placed in a muffle furnace, heated up to 700°C at a heating rate of 5°C/min, calcinated for 14h, and naturally cooled at room temperature. The product was taken out, ground in a mortar, passed through a mesh sieve for screening solid particles in the range of from 50 µm to 180 µm.
4. The screened solid particles were placed in 0.1 M HCl solution, ultrasonicated for 2 h with ultrasonic power of 500 W, rinsed to remove extremely fine particles, washed for multiple times, dried in an oven at a drying temperature of 120°C. The dried solid particles were placed in a muffle furnace, heated to 700°C at a heating rate of 5°C/min, calcinated for 6 h, naturally cooled at room temperature, and taken out to obtain the titanium dioxide adsorbent.

### Application Example 1

### Preparation of 2 mCi grade ⁶⁸Ge-⁶⁸Ga generator

First, 5 g of the adsorbents prepared in Examples and Comparative Examples were weighed and placed into a glass tube with a sand core, and a glass wool and a sieve plate were added and compacted. They were assembled into a generator cold column, and then the cold column was rinsed with 250 mL of 0.1 M hydrochloric acid solution. Next, the TiO₂ cold column was placed in a lead shield body. The lead shield body, generator housing and accessories were assembled to form a cold generator. 2 mCi of ⁶⁸Ge solution was taken and placed in a penicillin bottle, and injected into the cold generator by positive pressure injection using a syringe. The pressure injection of air was continued to evacuate the residual liquid in the column, and then the column was slowly washed by using 250 mL of 0.1 M hydrochloric acid solution. The residual liquid in the column was evacuated by pressure injection of air to obtain 2 mCi grade ⁶⁸Ge-⁶⁸Ga generator.

### Application Example 2

### Preparation of 30 mCi or higher grade ⁶⁸Ge-⁶⁸Ga generator

First, 5 g of the adsorbents prepared in Example 1 was weighed and placed into a glass tube with a sand core, and a glass wool and a sieve plate were added and compacted. They were assembled into a generator cold column, and then the cold column was rinsed with 250 mL of 0.1 M hydrochloric acid solution. Next, the TiO₂ cold column was placed in a lead shield body. The lead shield body, generator housing and accessories were assembled to form a cold generator. 30 mCi to 85 mCi of ⁶⁸Ge solution was taken and placed in a penicillin bottle, and injected into the cold generator by positive pressure iniection using a syringe. The pressure injection of air was continued to evacuate the residual liquid in the column, and then the column was slowly washed by using 250 mL of 0.1 M hydrochloric acid solution. The residual liquid in the column was evacuated by pressure injection of air to prepare ⁶⁸Ge- ^{of 68}Ga generators of 30 mCi grade, 50 mCi grade, and 85 mCi grade, respectively. The long-term elution was performed to investigate relevant performance indicators.

### Experimental Example 1

### Performance investigation of 2 mCi grade ⁶⁸Ge-⁶⁸Ga generator

Elution of ⁶⁸Ge-⁶⁸Ga generator: 2 mL of 0.1 M hydrochloric acid solution was taken into a 10 mL sterile syringe; The generator was slowly eluted by positive pressure injection, and the pressure injection of air was continued to evacuate the residual liquid in the column. The eluent solution was collected into a sterile penicillin bottle, to obtain a gallium [⁶⁸Ga] chloride solution. The activity of the eluent solution was measured to obtain the elution efficiency of 2 mCi order ⁶⁸Ge-⁶⁸Ga generator, ⁶⁸Ge breakthrough rate and elution efficiency after multiple elutions.

### Experimental Example 2

### Performance investigation of 30 mCi or higher grade ⁶⁸Ge-⁶⁸Ga generators

Elution of a ⁶⁸Ge-⁶⁸Ga generator: 5 mL of 0.1 M hydrochloric acid solution was taken into a 10 mL sterile syringe; The generator was slowly eluted by positive pressure injection, and the pressure injection of air was continued to evacuate the residual liquid in the column. The eluent solution was collected into a sterile penicillin bottle, to obtain a gallium [⁶⁸Ga] chloride solution. The activity values of the eluent solutions were measured to obtain the elution efficiency results of the ⁶⁸Ge-⁶⁸Ga generators, ⁶⁸Ge breakthrough rate and elution efficiency after multiple elutions at activities of 30 mCi grade, 50 mCi grade, and 80 mCi.

### Experimental Results:

Table 1-1. Performance tests of 2 mCi grade ⁶⁸Ge-⁶⁸Ga generators in the Application Example 1;
Table 1-2. Performance tests of 2 mCi grade ⁶⁸Ge-⁶⁸Ga generators in the Application Example 1;
Table 2. Elution efficiency of 30 mCi or higher grade ⁶⁸Ge-⁶⁸Ga generators in the Application Example 1;
Table 3. ⁶⁸Ge breakthrough rate of 30 mCi or higher grade ⁶⁸Ge-⁶⁸Ga generators in the Application Example 1;
Table 4. Performance of common ⁶⁸Ge-⁶⁸Ga generators commercially available on the markets

**Table 1-1**

| Adsorbent | Elution efficiency | ⁶⁸Ge breakthrough rate |
|---|---|---|
| Example 1 | 77% | 0.0001% |
| Example 2 | 67% | 0.0001% |
| Example 3 | 74% | 0.00007% |
| Example 4 | 75% | 0.00005% |
| Example 5 | 71% | 0.0001% |
| Comparative Example 3 | 48% | 0.19% |
| Comparative Example 4 | 59% | 0.05% |
| Comparative Example 5 | 65% | 0.004% |

Results Analysis: From Table 1-1, it can be seen that all of the 2mCi ⁶⁸Ge-⁶⁸Ga generators prepared by using adsorbents in Examples 1-5 have a ⁶⁸Ge breakthrough rate of ≤ 0.0001%, conform to the basic performance and quality requirements on ⁶⁸Ge-⁶⁸Ga generator, and can be used for commercial development of ⁶⁸Ge-⁶⁸Ga generators. It can be seen that, compared with the performance of the prior art ⁶⁸Ge-⁶⁸Ga generators, the initial elution efficiency of the 2mCi ⁶⁸Ge-⁶⁸Ga generator is consistent with those of the prior art. This is because the elution efficiency of the ⁶⁸Ge-⁶⁸Ga generator is related to ⁶⁸Ge loading activity. In the range of from 2 mCi to 30 mCi, there is no difference or improvement in elution efficiency, since the ⁶⁸Ge loading activity is small and unsaturated; However, the ⁶⁸Ge breakthrough rate is significantly reduced, indicating that the performance of the titanium dioxide prepared by the preparation method of the present application is significantly improved compared with the prior art. On the other hand, by using the preparation method of Comparative Example 1 (replacing the inhibitor with ammonia water) or Comparative Example 2 (not performing secondary gelation), micron-scale titanium dioxide cannot be produced or the yield is too low; while the performance of the ⁶⁸Ge-⁶⁸Ga generators prepared by using the adsorbents prepared in Comparative Example 3, Comparative Example 4, and Comparative Example 5 is too low, with low elution efficiency and a ⁶⁸Ge breakthrough rate of much higher than 0.001%. Thus, they are difficult to be used for commercial development. It shows that when sol-gel method is used for preparing titanium dioxide, it is necessary to use glacial acetic acid as the inhibitor, and perform calcination and washing under the state of secondary gel, and control the specific temperature and time for calcination. Only in this way can titanium dioxide with the following properties be prepared: particle size of from 10 µm to 300 µm, titanium dioxide nanoparticles with particle size of from 10 nm to 100 nm, pore size of from 5 nm to 30 nm and specific surface area of from 30 m²/g to 100 m²/g, smooth surface, and anatase phase. Only when such titanium dioxide is used as an adsorbent can the performance of the ⁶⁸Ge-⁶⁸Ga generator be improved.

Furthermore, none of the titanium dioxide prepared in Comparative Examples 1 to 5 has commercial development prospects. The performance of the titanium dioxide adsorbents prepared in Examples 1 to 5 is not much different, so the subsequent experiments will compare Example 1 with the prior art.

**Table 1-2**

| Items | Adsorbent | | | 2 mCi or higher grade ⁶⁸Ge-⁶⁸Ga generators | |
|---|---|---|---|---|---|
| | Specific surface area, m²/g | Average particle size of nanoparticles, nm | Pore size of mesopores, nm | Initial elution efficiency | Initial ⁶⁸Ge breakthrough rate |
| Example 1 | 52 | 39 | 12 | 77% | 0.0001% |
| Example 6 | 89 | 12 | 5.7 | 75% | 0.0005% |
| Example 7 | 78 | 96 | 27 | 77% | 0.0003% |
| Example 8 | 97 | 53 | 8.4 | 73% | 0.0001% |
| Example 9 | 31 | 65 | 19 | 71% | 0.0001% |
| Comparative Example 6 | 34 | 156 | 78 | 69% | 0.002% |
| Comparative Example 7 | 23 | 59 | 23 | 63% | 0.001% |

From the above table, it can be seen that the adsorbents of Examples 1 and 6 to 9 are of the anatase type, and have specific surface area of from 30 m²/g to 100 m²/g, the average particle size of the nanoparticles of from 10 nm to 100 nm; the pore size of the mesopores of between 5 nm and 30 nm, and the prepared 2 mCi ⁶⁸Ge-⁶⁸Ga generators have ⁶⁸Ge breakthrough rate of ≤ 0. 0001%, and the initial elution efficiency of greater than or equal to 71%, thus conform to basic performance and quality requirements on ⁶⁸Ge-⁶⁸Ga generator and can be used for commercial development of ⁶⁸Ge-⁶⁸Ga generators. Compared with other adsorbents, the specific surface area, the average particle size of nanoparticles, and the pore size of other adsorbents affect the elution efficiency and breakthrough rate of ⁶⁸Ge-⁶⁸Ga generator, reduce the quality of ⁶⁸Ge-⁶⁸Ga generator. This indicates that the above-mentioned titanium dioxide of the Examples as an adsorbent can improve the performance of ⁶⁸Ge-⁶⁸Ga generator.

**Table 2**

| ⁶⁸Ge loading activity | ⁶⁸Ga elution efficiency | | | | | | |
|---|---|---|---|---|---|---|---|
| | 1d | 30d | 60d | 90d | 120d | 150d | 200d |
| 30mCi | 83% | 81% | 80% | 78% | 77% | 75% | 73% |
| 50mCi | 81% | 80% | 78% | 80% | 78% | 77% | 74% |
| 85mCi | 86% | 85% | 83% | 80% | 80% | 79% | 77% |

**Table 3**

| ⁶⁸Ge loading activity | ⁶⁸Ge breakthrough rate | | | | | |
|---|---|---|---|---|---|---|
| | 1d | 30d | 90d | 120d | 150d | 200d |
| 30 mCi | <0.0001% | <0.0001% | <0.0001% | <0.0001% | <0.0001% | <0.0001% |
| 50 mCi | 0.0001% | <0.0001% | <0.0001% | <0.0001% | <0.0001% | <0.0001% |
| 85 mCi | <0.0001% | <0.0001% | <0.0001% | <0.0001% | 0.0001% | <0.0001% |

**Table 4**

| **Manufacturer** | **Specification** | **Model** | **Adsorption material** | **Initial elution efficiency** | **Long-term elution efficiency** | **⁶⁸Ge breakthrough rate** |
|---|---|---|---|---|---|---|
| Russian Cyclotron Company | 10-100mCi | Obninsk | TiO₂ | About 75% | 60% (200 elutions) | <0.005% |
| German EZAG Company | 10-100mCi | IGG100 | TiO₂ | >65% | 65% (200 elutions) | <0.001% |
| Belgian IRE ELiT Company | 20-50mCi | Galli EO | TiO₂ | >67% | 55% (12 months) | <0.001% |
| Canadian Nordion Company | 30mCi | / | TiO₂ | 75%-65% | 67±5% (200 elutions) | <0.001% |
| Remarks: Data Source: Current Radiopharmaceuticals, 2012, 5, 202-211. | | | | | | |

Results analysis: It can be seen from Table 2 to Table 4 that in the range of 30-85 mCi loading activity, the initial elution efficiency is 80% or more, up to 86%, and the elution efficiency after long-term elution (average elution time of 6 months) can still be maintained at 70% or more; Compared with several common ⁶⁸Ge-⁶⁸Ga generators commercially available on the market (Table 4), under the premise that ⁶⁸Ge breakthrough rate is reduced (to about 0.0001%), the initial elution efficiency is increased to 80% or more, and the elution efficiency can still be maintained at 70% or more after 200 days of elution. This indicates that by using the titanium dioxide prepared by the preparation method of the present application, the performance of the ⁶⁸Ge-⁶⁸Ga generator is greatly improved.

Data of long-term elution efficiency and time in Table 4 indicates that: The existing technology does not clearly stipulate the long-term elution efficiency, and different manufacturers have different regulations on long-term elution. Commonly published long-term elution data are elution time of 200 days or 200 elutions; The validity period of pharmaceutical grade ⁶⁸Ge-⁶⁸Ga generator is generally up to 12 months; and the validity period of chemical grade ⁶⁸Ge-⁶⁸Ga generator is even up to 3 years (based on different performance indicators, such as the elution efficiency of the ⁶⁸Ge-⁶⁸Ga generator of ≥ 45% and the validity period of ⁶⁸Ge breakthrough rate of ≤ 0.005% in Russia, the validity period can be up to 3 years). Therefore, 200 days are used in this application as the comparison time for long-term elution efficiency.

Commercially available titanium dioxide based ⁶⁸Ge-⁶⁸Ga generators, such as reported in the patents of the Russian Cyclotron Company, the German EZAG Company, the Belgian IRE ELiT Company and the Canadian Nordion Company, have one-year long-term elution efficiency or the elution efficiency of 200 elutions in the range of from 55% to 65%, which is generally difficult to achieve 70% or more.

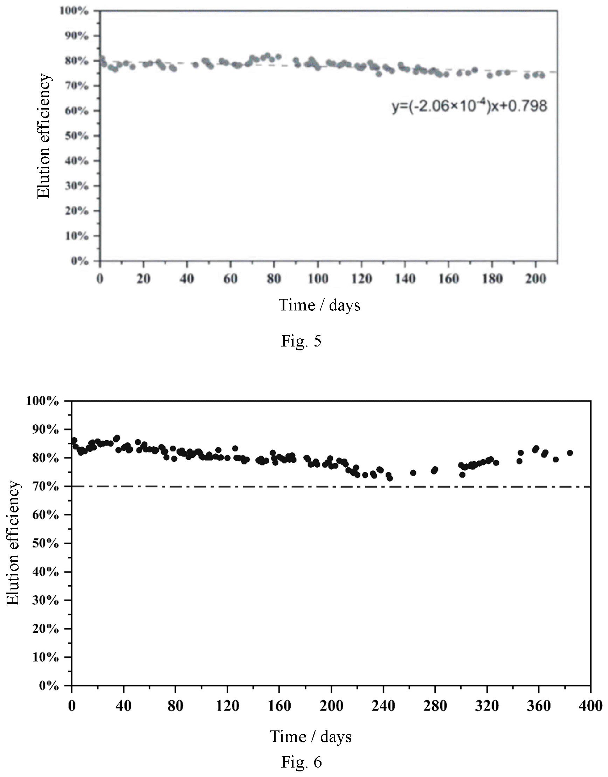

A homemade 85 mCi ⁶⁸Ge-⁶⁸Ga generator was eluted with 5 mL of 0.1 M HCl solution. The 85 mCi ⁶⁸Ge-⁶⁸Ga generator was prepared using the adsorbent of Example 1. The change of elution efficiency in long-term elution investigation is shown in Fig. 6. The initial elution efficiency was as high as 86%, which indicates very high elution efficiency. The elution efficiency slowly decreased with the increase of elution days, and showed a trend of up and down fluctuation. The elution efficiency reached the lowest value, about 73%, on day 245. It may be due to the low temperature, which caused the elution efficiency to decrease. Then the elution efficiency gradually increased. After one year, the long-term elution efficiency increased to 81%, which was significantly higher than those of titanium dioxide-based products commercially available on the market and those reported in literatures and patents.

Furthermore, Fig. 5 shows a diagram of the change in 200-day elution efficiency of a 50 mCi grade ⁶⁸Ge-⁶⁸Ga generator. It can be seen that the elution efficiency slowly decreases with the increase of elution times, and shows a trend of fluctuating up and down; Based on the above trend, a change formula (y = (-2.06 × 10)⁻⁴)x+0.798) was obtained by linear fitting. Through calculation, it can be concluded that after 12 months, the elution efficiency can still be maintained at 70% or more (according to the formula, y = 72% is calculated by substituting the elution days x = 365 into the formula). Moreover, the ⁶⁸Ge breakthrough rate after multiple elutions is stable at about 0.0001%, which is far less than the breakthrough rate limit of ≤ 0. 001% for ⁶⁸Ge in the European Pharmacopoeia standard for gallium [⁶⁸Ga] chloride solution.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

## Claims

1. An adsorbent for germanium [⁶⁸Ge]-gallium [⁶⁸Ga] generator, wherein the adsorbent is used for adsorbing ⁶⁸Ge element; the adsorbent comprises a plurality of titanium dioxide particles, and the adsorbent satisfies the following conditions:
1) the adsorbent has a specific surface area of from 30m²/g to 100 m²/g; and
2) the titanium dioxide particles consist of a plurality of nanoparticles, and the plurality of nanoparticles have an average particle size of from 10 nm to 100 nm; the nanoparticles comprise mesopores having a pore size of from 5 nm to 30 nm.

2. The adsorbent according to claim 1, wherein the specific surface area of the adsorbent is from 31 m²/g to 97 m²/g; the plurality of nanoparticles have an average particle size of from 12 nm to 96 nm; and the mesopores have a pore size of from 5.7 nm to 19 nm.

3. The adsorbent according to claim 1 or 2, wherein the adsorbent has a crystal phase of anatase type.

4. The adsorbent according to any one of claims 1 to 3, wherein the adsorbent has an average particle size of from 10 µm to 300 µm.

5. The adsorbent according to any one of claims 1 to 4, wherein the adsorbent has a pore volume of from 0.1 cm³/g to 0.5 cm³/g.

6. The adsorbent according to any one of claims 1 to 5, wherein the adsorbent comprises: one or more of the titanium dioxide particles having an average particle size of from 30 µm to 60 µm, the titanium dioxide particles having an average particle size of from 50 µm to 100 µm, the titanium dioxide particles having an average particle size of from 75 µm to 150 µm, and the titanium dioxide particles having an average particle size of from 90 µm to 180 µm.

7. The adsorbent according to any one of claims 1 to 6, wherein the titanium dioxide particles are subjected to any one or more of oscillation, vortex, and ultrasonic treatments to smoothen their surface.

8. A preparation method of the titanium dioxide adsorbent for ⁶⁸Ge-⁶⁸Ga generator, wherein the titanium dioxide adsorbent is prepared by sol-gel method, and the method comprises the following steps:
Dissolving a titanium source by an organic alcohol and adding glacial acetic acid, to obtain a titanium source solution;
Adding the titanium source solution dropwise to a purified water solution while stirring, and allowing to stand to obtain a first gel, and heating and heat preserving and recrystallizing the first gel to obtain a second gel;
Shaping the second gel by first calcination, then grinding and screening to obtain solid particles with a particle size of from 10 µm to 300 µm, and surface modifying the solid particles, followed by second calcination, to obtain the adsorbent.

9. The preparation method according to claim 8, wherein the preparation method satisfies one or more of the following conditions:
1) the stirring while adding dropwise has a stirring speed of from 10 rpm 100 rpm, and the adding dropwise has an adding rate of from 1 mL/min to 100 mL/min;
2) a volume ratio of the titanium source solution to the purified water is 1 : (0.5-10);
3) the heating and heat preserving is carried out at a temperature of from 110°C to 180°C for 6 h to 36 h;
4) surface modifying the solid particles is carried out by ultrasonic treatment at a ultrasonic power of from 50 W to 1000W for 0.5 h to 12 h;
5) Grinding and screening to obtain solid particles with a particle size of from 30 µm to 60 µm, from 50 µm to 100 µm, from 75 µm to 150 µm and from 90 µm to 180 µm;
6) the temperature for the first calcination is from 300°C to 700°C and the temperature for the second calcination is from 400°C to 700°C; and
7) the time for the first calcination is from 1 h to 12 h and the time for the second calcination is from 1 h to 6 h.

10. A germanium [⁶⁸Ge]-gallium [⁶⁸Ga] generator, comprising:
Packed cylinder filled with the adsorbent according to any one of claims 1 to 7 or the adsorbent prepared by the preparation method according to claim 8 or 9, wherein the adsorbent adsorbs ⁶⁸Ge element.
